Europäisches Patentamt

European Patent Office

Office européen des brevets

(19)

(11) Numéro de publication : **0 287 635 B1**

# (12) FASCICULE DE BREVET EUROPEEN

(45) Date de publication du fascicule du brevet :
**07.08.91 Bulletin 91/32**

(51) Int. Cl.⁵ : **G09B 25/00, A63H 33/16**

(21) Numéro de dépôt : **87907113.2**

(22) Date de dépôt : **23.10.87**

(86) Numéro de dépôt international :
**PCT/FR87/00415**

(87) Numéro de publication internationale :
**WO 88/03304 05.05.88 Gazette 88/10**

(54) **ENSEMBLE POUR LA REALISATION D'UNE MAQUETTE EN CARTON.**

(30) Priorité : 24.10.86 FR 8614943

(43) Date de publication de la demande :
26.10.88 Bulletin 88/43

(45) Mention de la délivrance du brevet :
07.08.91 Bulletin 91/32

(84) Etats contractants désignés :
AT BE CH DE GB IT LI LU NL SE

(56) Documents cités :
DE-A- 3 115 066
DE-C- 688 652
US-A- 3 629 967
US-A- 3 654 375
US-A- 4 366 961

(73) Titulaire : MICHEL, Eric
Rue Principale, Neubois
F-67220 Ville (FR)

(72) Inventeur : MICHEL, Eric
Rue Principale, Neubois
F-67220 Ville (FR)

(74) Mandataire : Nuss, Pierre
10, rue Jacques Kablé
F-67000 Strasbourg (FR)

## Description

La présente invention concerne le domaine des maquettes, en particulier des maquettes en carton, et a pour objet un ensemble, pour la réalisation d'une telle maquette, composé d'une ou plusieurs planches en carton, ainsi que d'un outil de rainurage.

Actuellement, la majorité des maquettes existantes sont soit en matière synthétique, soit en balsa, ce qui entraîne, d'une part, un coût important de fabrication, et, d'autre part, un temps de fabrication très long du fait du moulage de chaque pièce.

Autrefois, certaines maquettes étaient réalisées en carton, et il est encore possible de trouver aujourd'hui de telles maquettes, réalisées selon ces techniques anciennes, dont l'aspect est très souvent grossier et médiocre. Le document DE-L-688652, qui décrit l'art antérieur, mentionne également un matériau de base pour la réalisation de modèles réduits de bâtiments constitué de carton. En effet, les planches constituant les éléments de la maquette sont toujours imprimées sur une seule face, tant des motifs décoratifs et des couleurs que des lignes de coupe et de pliage. Il s'ensuit que, sitôt la réalisation imparfaite, les lignes de coupe et de pliage apparaissent inévitablement sur la face extérieure des éléments apparents de la maquette assemblée. En outre, les éléments apparents qui constituent l'essentiel du corps de la maquette sont composés de nombreuses pièces à découper, puis à assembler par collage, ce qui nuit à l'aspect général de l'ensemble. L'emploi des éléments apparents qui constituent l'essentiel du corps de la maquette, en une seule pièce, ne permet pas de tenir compte des galbes et des arrondis des objets à reproduire. Enfin, des problèmes naissent très souvent lors du pliage du carton, car celui-ci se plie irrégulièrement, entraînant des craquelures ou des déchirures sur les surfaces apparentes de la maquette. Il est donc nécessaire de rainurer préalablement le carton, ce qu'aucun outil existant ne permet de faire de manière acceptable. L'utilisateur se sert en général de la pointe d'une paire de ciseaux, ce qui a pour résultat, soit de rainurer le carton irrégulièrement et hors des lignes de pliage, soit de le percer lors d'une pression trop importante sur la paire de ciseaux.

La présente invention telle que définie dans la revendication 1 a pour objet de pallier ces inconvénients, en offrant à l'utilisateur un ensemble permettant de réaliser des maquettes en carton dont le ou les éléments apparents qui constituent l'essentiel du corps de la maquette sont d'une seule pièce, tout en reproduisant de manière fidèle et servile toutes les formes désirées, notamment les galbes et les arrondis, et dont l'aspect extérieur est vierge de toute craquelure ou déchirure au niveau du pliage, et vierge de toute impression des lignes de coupe ou de pliage elles-mêmes.

L'ensemble conforme à l'invention pour la réalisation d'une maquette en carton est principalement constitué, par au moins une planche en carton constituant tous les éléments de la maquette, enduite d'une pellicule d'un vernis à l'eau, ne présentant aucun sens de trame, de grammage compris entre 150 $g/m^2$ et 550 $g/m^2$, dont le recto est imprimé de couleurs et/ou de motifs décoratifs correspondant à la face extérieure des éléments apparents de la maquette assemblée, et dont le verso est imprimé des lignes de coupe et de pliage correspondant à la face interne desdits éléments apparents de la maquette assemblée, ainsi que des lignes de coupe et de pliage des éléments, dits raidisseurs, de la maquette, de telle sorte que le ou les éléments apparents qui constituent l'essentiel du corps de la maquette soient d'une seule pièce, dont la rigidité et le maintien des formes, notamment des galbes, est assuré par lesdits raidisseurs.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :

la figure 1 est une vue en plan du recto d'une planche en carton, imprimé de couleurs et de motifs décoratifs correspondant à la face extérieure des éléments apparents constituant l'essentiel du corps d'une maquette de bateau ;

la figure 2 est une vue en plan du verso de la planche représentée figure 1, imprimé des lignés de coupe et de pliage des éléments apparents de la maquette de bateau, et la figure 3 est une vue en perspective, de l'outil de rainurage des lignes de pliage.

Conformément à l'invention, l'ensemble pour la réalisation d'une maquette en carton est principalement constitué par au moins une planche 1 en carton constituant tous les éléments de la maquette, enduite d'une pellicule d'un vernis à l'eau, ne présentant aucun sens de trame, de grammage compris entre 150 $g/m^2$ et 550 $g/m^2$, dont le recto est imprimé de couleurs 6 et/ou de motifs décoratifs 7 correspondant à la face extérieure des éléments apparents 4 de la maquette assemblée, et dont le verso est imprimé des lignes de coupe 2 et de pliage 3 correspondant à la face interne desdits éléments apparents 4 de la maquette assemblée, ainsi que des lignes de coupe 2 et de pliage 3 des éléments 5, dits raidisseurs, de la maquette, de telle sorte que le ou les éléments apparents 4 qui constituent l'essentiel du corps de la maquette soient d'une seule pièce, dont la rigidité et le maintien des formes, notamment des galbes, est assuré par lesdits raidisseurs 5.

Le choix d'un carton n'ayant aucun sens de trame permet de le travailler dans toutes les directions. En outre, la pellicule d'un vernis à l'eau recouvrant soit le recto, soit le verso la planche 1 en carton lui confère une protection au niveau de la manipulation ainsi qu'un aspect brillant et esthétique. De plus, une telle pellicule permet aussi aux impressions couleurs de ne pas être détériorées et attaquées par la colle utilisée pour le montage de la maquette.

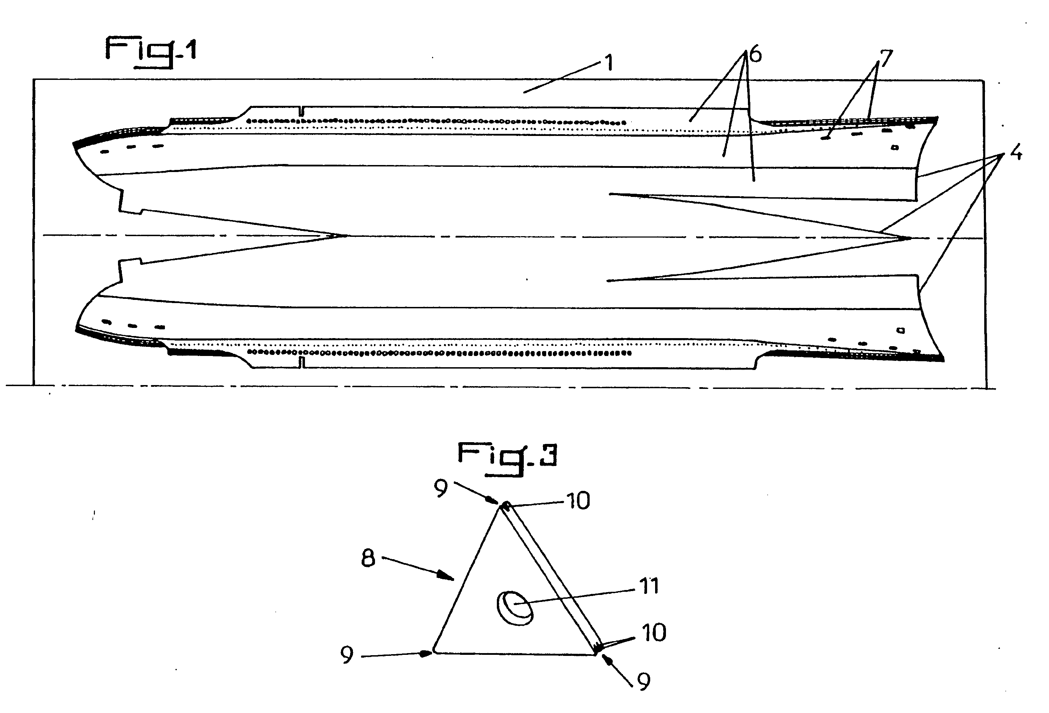

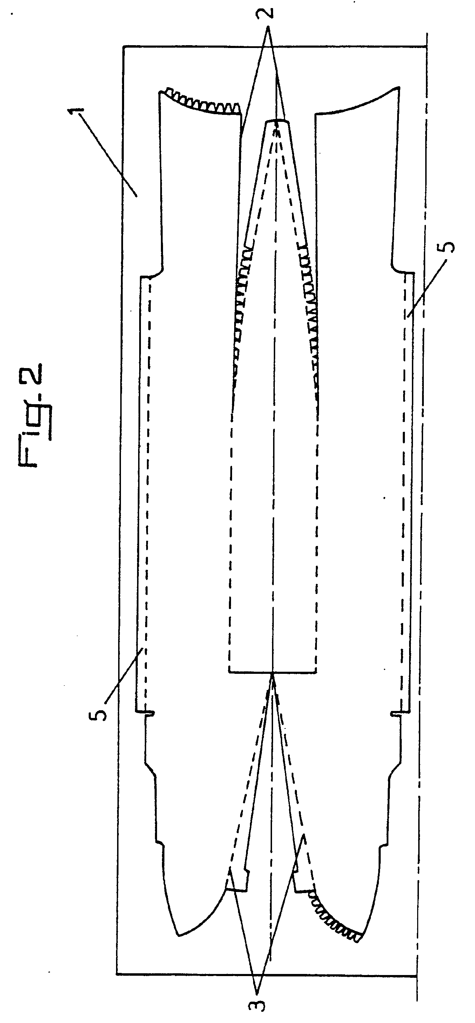

Sur le recto de la planche 1 en carton seront donc imprimés les couleurs 6 ainsi que les motifs décoratifs 7 visibles sur la maquette une fois assemblée. Ces éléments décoratifs 7 seront, pour l'exemple de réalisation d'une maquette de bateau représentée à la figure 1, notamment sous forme de hublots, portes, balustrades ou autres. Sur le verso seront imprimées les lignes de coupe 2 et de pliage 3 des éléments apparents 4, ainsi que des raidisseurs 5. Les lignes de coupe 2 seront normalement représentées par des lignes continues et les lignes de pliage 3 par des lignes interrompues ou pointillées (voir figure 2). Bien entendu, très souvent, les contours des couleurs 6 sur le recto de la planche 1 en carton se superposent pratiquement avec les lignes de coupe 2 situées sur le verso de la planche 1. Quant aux raidisseurs 5, ils sont normalement situés à l'intérieur de la maquette et ne sont donc pas visibles. C'est pourquoi, le recto de la ou des planches 1 en carton peut également être imprimé des lignes de coupe 2 et de pliage 3 des éléments 5, dits raidisseurs, de la maquette. Néanmoins, il arrive que certains éléments apparents 4 de la maquette jouent eux-mêmes le rôle de raidisseurs 5, dont tout ou partie sera visible. Par exemple, la quille d'un bateau peut être prolongée, à l'intérieur de la coque du bateau, de manière à constituer un raidisseur 5. Une partie de la quille sera apparente, et une autre partie sera non visible, car interne à la coque. C'est pourquoi, le recto de la ou des planches 1 en carton peut aussi être imprimé des couleurs 6 et/ou de motifs décoratifs 7 correspondant à tout ou partie de la face extérieure des éléments 5, dits raidisseurs, de la maquette.

Bien entendu, les raidisseurs 5 pourront également être situés sur une ou plusieurs planches 1 spécifiques. Le grammage de chaque planche 1 en carton dont l'impression correspond aux éléments apparents 4 qui constituent l'essentiel du corps de la maquette et/ou aux raidisseurs 5, est avantageusement compris entre 370 g/m$^2$ et 410 g/m$^2$, de préférence 390 g/m$^2$. D'autre part, le grammage de chaque planche 1 en carton dont l'impression correspond aux éléments apparents 4 qui constituent les éléments secondaires de la maquette est avantageusement compris entre 210 g/m$^2$ et 250 g/m$^2$, de préférence 230 g/m$^2$. Par exemple, un mode de réalisation peut prévoir que les éléments apparents 4 qui constituent l'essentiel du corps de la maquette, ainsi que les raidisseurs 5, soient situés sur une planche 1 en carton de grammage 390 g/m$^2$, et qu'une seconde planche 1 en carton, qui comporte les éléments de détail de la maquette, soit de grammage 230 g/m$^2$. Sur l'exemple représenté figure 1 d'une maquette de bateau, l'élément apparent 4 qui constitue l'essentiel du corps de la maquette est la coque du bateau. Elle sera, par conséquent, réalisée entièrement d'une seule pièce. Mais les éléments secondaires, tels les ponts, les cheminées, la piscine, les drapeaux, les hélices et autres, seront collés. Pour une maquette de voiture, l'élément apparent constituant l'essentiel du corps de la maquette sera la carosserie. Pour un avion, il s'agira du fuselage.

Le découpage successif de chaque pièce peut s'effectuer à l'aide d'une paire de ciseaux. Un plan ou croquis de la maquette éclatée pourra être joint à l'ensemble, sur lequel figurera une numérotation indiquant la chronologie de montage des différents éléments apparents 4 et des raidisseurs 5 constitutifs de la maquette.

Selon une autre caractéristique de l'invention, l'ensemble est également constitué par un outil de rainurage 8 des lignes de pliage 3. Cet outil 8 est de forme polygonale, et est pourvu en son centre d'un orifice de préhension 11.

Comme le montre la figure 3, l'outil de rainurage 8 pourra être avantageusement de forme triangulaire, la section de chacun des trois angles présentant, pour le premier, une pointe 9, pour le second, deux pointes 9 séparées par une rainure 10, et pour le troisième, trois pointes 9, séparées chacune par une rainure 10.

Ainsi, l'angle présentant une pointe 9 permet le rainurage des planches 1 en carton dont le grammage est inférieur à 350 g/m$^2$. L'angle présentant deux pointes 9 permet, par conséquent, deux rainurages, nécessaires pour le pliage de planche 1 en carton dont le grammage est supérieur à 350 g/m$^2$. Enfin, l'angle présentant trois pointes 9 permet trois rainurages nécessaires pour le pliage arrondi des arêtes émoussées. Les pointes 9 ne sont pas vives, ni aiguisées, mais légèrement arrondies à leur extrémité, de manière à ne pas transpercer la planche 1 en carton. L'orifice 11 permet de maintenir correctement et efficacement l'outil 8 entre le pouce et l'index ou le majeur, de la main de l'utilisateur.

Enfin, l'encollage respectif des parties à assembler a lieu, de préférence, avec une colle gel de contact qui a comme propriété principale de coller instantanément, ce qui est une condition indispensable pour assurer le maintien efficace des parties subissant des effets de traction. En outre, la colle ne sera pas détériorée au fil du temps, du fait du pelliculage de la ou des planches 1 en carton.

L'ensemble, objet de l'invention, pour la réalisation d'une maquette en carton, permet donc la reproduction fidèle et servile de toutes les formes désirées, notamment les galbes et les arrondis. Il peut avoir une application dans différents secteurs, notamment celui de l'éducation manuelle des enfants, ou celui des passionnés du modélisme. Ces maquettes en carton peuvent également avoir pour fonction celle de support publicitaire, par exemple en reproduisant un objet d'une certaine dénomination commerciale et en imprimant sur l'objet·ladite dénomination commerciale.

## Revendications

1. Ensemble pour la réalisation d'une maquette en carton, caractérisé en ce qu'il est principalement constitué, par au moins une planche (1) en carton constituant tous les éléments de la maquette, enduite d'une pellicule d'un vernis à l'eau, ne présentant aucun sens de trame, de grammage compris entre 150 g/m² et 550 g/m², dont le recto est imprimé de couleurs (6) et/ou de motifs décoratifs (7) correspondant à la face extérieure des éléments apparents (4) de la maquette assemblée, et dont le verso est imprimé des lignes de coupe (2) et de pliage (3) correspondant à la face interne desdits éléments apparents (4) de la maquette assemblée, ainsi que des lignes de coupe (2) et de pliage (3) des éléments (5), dits raidisseurs, de la maquette, de telle sorte que le ou les éléments apparents (4) qui constituent l'essentiel du corps de la maquette soient d'une seule pièce, dont la rigidité et le maintien des formes, notamment des galbes, est assuré par lesdits raidisseurs (5).

2. Ensemble selon la revendication 1, caractérisé en ce que le recto de la ou des planches (1) en carton est, en outre, également imprimé des lignes de coupe (2) et de pliage (3) des éléments (5), dits raidisseurs, de la maquette.

3. Ensemble selon l'une quelconque des revendications 1 et 2, caractérisé en ce que le recto de la ou des planches (1) en carton est, en outre, également imprimé des couleurs (6) et/ou de motifs décoratifs (7) correspondant à tout ou partie de la face extérieure des éléments (5), dits raidisseurs, de la maquette.

4. Ensemble selon l'une quelconque des revendications 1 à 3, caractérisé en ce que le grammage de chaque planche (1) en carton dont l'impression correspond aux éléments apparents (4) qui constituent l'essentiel du corps de la maquette et/ou aux raidisseurs (5), est avantageusement compris entre 370 g/m² et 410 g/m², de préférence 390 g/m².

5. Ensemble selon l'une quelconque des revendications 1 à 4, caractérisé en ce que le grammage de chaque planche (1) en carton dont l'impression correspond aux éléments apparents qui constituent les éléments secondaires de la maquette, est avantageusement compris entre 210 g/m² et 250 g/m², de préférence 230 g/m².

6. Ensemble selon l'une quelconque des revendications 1 à 5, caractérisé en ce qu'il est constitué, en outre, par un outil de rainurage (8) des lignes de pliage (3).

7. Ensemble selon la revendication 6, caractérisé en ce que l'outil de rainurage (8) est de forme polygonale et est pourvu en son centre d'un orifice de préhension (11).

8. Ensemble selon la revendication 7, caractérisé en ce que l'outil de rainurage (8) est de forme triangulaire, la section de chacun des trois angles, présentant, pour le premier, une pointe (9), pour le second, deux pointes (9) séparées par une rainure (10), et pour le troisième, trois pointes (9) séparées chacune par une rainure (10).

## Patentansprüche

1. Anordnung zur Verwirklichung eines Modells aus Karton, dadurch gekennzeichnet, daß sie im wesentlichen von mindestens einem Kartonbogen (1) gebildet wird, der alle Teile des Modells bildet, daß der Kartonbogen mit einem Wasserlackfilm überzogen ist, keine Laufrichtung aufweist, ein Quadratmetergewicht zwischen 150 g/m² und 550 g/m² hat, daß dessen Vorderseite mit Farben (6) und/oder ausschmükkenden Motiven entsprechend der Außenfläche der sichtbaren Teile (4) des zusammengebauten Modells bedruckt ist und daß dessen Rückseite mit Schnittlinien (2) und Faltlinien (3) entsprechend der Innenfläche der genannten sichtbaren Teile (4) des zusammengebauten Modells sowie mit Schnittlinien (2) und Faltlinien (3) der Elemente (5), nämlich Verstärkungen, des Modells bedruckt ist, so daß das oder die sichtbaren Teile (4), die das Wesentliche des Modellkörpers bilden, aus einem Stück sind, wobei dessen Festigkeit und die Stabilität der Formen, insbesondere der Rundungen, durch die Verstärkungen (5) gewährleistet werden.

2. Anordnung nach Anspruch 1, dadurch gekennzeichnet, daß die Vorderseite des oder der Kartonbögen (1) außerdem auch mit Schnittlinien (2) und Faltlinien (3) der Elemente (5), der besagten Verstärkungen, des Modells bedruckt ist.

3. Anordnung nach Anspruch 1 oder 2, dadurch gekennzeichnet, daß die Vorderseite des oder der Kartonbögen (1) außerdem auch mit Farben (6) und/ oder ausschmückenden Motiven (7) entsprechend der Gesamtheit oder einem Teil der Außenfläche der Elemente (5), der besagten Verstärkungen, des Modells bedruckt ist.

4. Anordnung nach einem der Ansprüche 1 bis 3, dadurch gekennzeichnet, daß das Quadratmetergewicht jedes Kartonbogens (1), dessen Bedruckung den sichtbaren Teilen (4), die das Wesentliche des Modellkörpers bilden und/oder den Verstärkungen (5) entspricht, vorteilhafterweiser zwischen 370 g/m² und 410 g/m², vorzugsweise 390 g/m² beträgt.

5. Anordnung nach einem der Ansprüche 1 bis 4, dadurch gekennzeichnet, daß das Quadratmetergewicht jedes Kartonbogens (1), dessen Bedruckung den sichtbaren Teilen entspricht, die die Nebenelemente des Modells bilden, vorteilhafterweise zwischen 210 g/m² und 250 g/m², vorzugsweise 230 g/m² beträgt.

6. Anordnung nach einem der Ansprüche 1 bis 5, dadurch gekennzeichnet, daß sie außerdem durch ein Falzwerkzeug (8) für die Faltlinien gebildet wird.

7. Anordnung nach Anspruch 6, dadurch gekennzeichnet, daß das Falzwerkzeug (8) polygonförmig ausgebildet ist und daß in dessen Zentrum eine Greiföffnung (11) vorgesehen ist.

8. Anordnung nach Anspruch 7, dadurch gekennzeichnet, daß das Falzwerkzeug (8) dreieckförmig ausgebildet ist, wobei der Querschnitt der ersten Ecke eine Spitze (9) aufweist, der Querschnitt der zweiten Ecke zwei Spitzen (9), die durch eine Nut (10) getrennt sind, und der Querschnitt der dritten Ecke drei Spitzen (9), die jeweils durch eine Nut (10) getrennt sind, aufweist.

## Claims

1. Assembly for producing a cardboard model, characterised in that it consists mainly of at least one cardboard sheet (1) which forms all the elements of the model, is coated with a film of a water-type varnish, has no texture direction and a basis weight of between 150 g/m² and 550 g/m², of which the recto is printed in colour (6) and/or with decorative patterns (7) corresponding to the external face of the visible elements (4) of the assembled model and of which the verso is printed with the cutting lines (2) and folding lines (3) corresponding to the internal face of said visible elements (4) of the assembled model, as well as cutting lines (2) and folding lines (3) of the so-called stiffening elements (5) of the model such that the visible element or elements (4) which form the main part of the body of the model are in a single piece of which the rigidity and the stability of shape, in particular of the contours, is assured by said stiffeners (5).

2. Assembly according to claim 1, characterised in that the recto of the cardboard sheet or sheets (1) is, furthermore, also printed with the cutting lines (2) and folding lines (3) of the so-called stiffening elements (5) of the model.

3. Assembly according to any one of claims 1 and 2, characterised in that the recto of the cardboard sheet or sheets (1) is, furthermore, also printed with the colours (6) and/or decorative patterns (7) corresponding to all or part of the external face of the so-called stiffening elements (5) of the model.

4. Assembly according to any one of claims 1 to 3, characterised in that the basis weight of each cardboard sheet (1) of which the printing corresponds to the visible elements (4) forming the main part of the body of the model and/or to the stiffeners (5), is advantageously between 370 g/m² and 410 g/m², preferably 390 g/m².

5. Assembly according to any one of claims 1 to 4, characterised in that the basis weight of each cardboard sheet (1) of which the printing corresponds to the visible elements forming the secondary elements of the model is advantageously between 210 g/m² and 250 g/m², preferably 230 g/m².

6. Assembly according to any one of claims 1 to 5, characterised in that it consists, furthermore, of a grooving tool (8) for grooving the folding lines (3).

7. Assembly according to claim 6, characterised in that the grooving tool (8) is of polygonal shape and is provided with a gripping orifice (11) in its centre.

8. Assembly according to claim 7, characterised in that the grooving tool (8) is of triangular shape, the cross section of the first corner having one point (9), the second corner two points (9) separated by a groove (10) and the third corner three points (9) each separated by a groove (10).

# Fig.1

EP 0 287 635 B1

# Fig.3

Fig.2